# EUROPÄISCHE PATENTSCHRIFT

(11) **EP 3 918 190 B1**
(45) Veröffentlichungstag und Bekanntmachung des Hinweises auf die Patenterteilung: **18.06.2025**
(21) Anmeldenummer: 20702260.9
(22) Anmeldetag: 24.01.2020
(51) Int. Cl.: F02D 9/04, F02D 9/10, F16K 27/02

(54) **VORRICHTUNG ZUR ABGASFÜHRUNG FÜR EINE BRENNKRAFTMASCHINE**
DEVICE FOR CONDUCTING EXHAUST FOR AN INTERNAL COMBUSTION ENGINE
DISPOSITIF POUR L'ÉVACUATION DE GAZ D'ÉCHAPPEMENT POUR UN MOTEUR À COMBUSTION INTERNE

(30) Priorität: 31.01.2019 AT 352019
(43) Veröffentlichungstag der Anmeldung: 08.12.2021
(73) Patentinhaber: MAN Truck & Bus SE, 80995 München (DE)
(72) Erfinder: EIBL, Thomas, 3353 Seitenstetten (AT); HUNDSBERGER, Ewald, 4421 Aschach / Steyr (AT); LEITENMAYR, Franz, 4320 Perg (AT)
(74) Vertreter: v. Bezold & Partner Patentanwälte - PartG mbB
(86) Internationale Anmeldenummer: PCT/EP2020/051754
(87) Internationale Veröffentlichungsnummer: WO 2020/156945

(56) Entgegenhaltungen:
- EP-A1- 3 236 052
- EP-A2- 1 801 392
- WO-A1-2017/066167
- DE-A1- 10 323 978
- DE-A1- 102017 109 062
- DE-A1- 102020 129 067
- DE-A1- 19 500 475
- DE-A1- 19 914 213
- DE-C1- 4 229 299
- DE-U1- 202007 013 151
- FR-A1- 3 102 824
- US-A1- 2005 039 448
- US-B1- 9 850 798

## Beschreibung

Die Erfindung betrifft eine Vorrichtung zur Abgasführung für eine Brennkraftmaschine mit einer Abgasabsperrklappenvorrichtung.

Eine ausreichende und zuverlässige Bremsung von Fahrzeugen, insbesondere von großen Nutzfahrzeugen wie Lastkraftwagen oder Omnibussen, ist wünschenswert. Während Trommel- oder Scheibenbremsen in der Lage sind, über einen kurzen Zeitraum eine große Menge an Energie aufzunehmen, wird die aufgenommene Energie im Bremsmechanismus in Wärme umgewandelt. Ein Motorbremssystem kann verwendet werden, um das Bremsen des Fahrzeugs zu unterstützen, insbesondere als Dauerbremsvorrichtung.

Es sind beispielsweise Bremssysteme bekannt, die Abgasbremsen aufweisen, die den Abgasstrom durch das Abgassystem blockieren oder zumindest verringern und dabei einen Abgasgegendruck zum Erhöhen einer Motorbremsleistung im Leerlauf der Brennkraftmaschine erhöhen.

Beispielsweise offenbart die EP 1 801 392 A2 eine Vorrichtung zur Steigerung der Bremsleistung einer mehrzylindrigen Brennkraftmaschine eines Fahrzeugs während des Motorbremsbetriebes. Die Vorrichtung weist eine motorinterne Motorbremsvorrichtung, einen ein- oder mehrstufigen Abgasturbolader mit einer Abgasturbine und einem Ladeluftverdichter sowie zwei Abgassammelstränge auf. Über die Abgassammelstränge ist jeweils das aus mehreren Zylindern ausgestoßene Abgas gruppenweise zusammengefasst einem Turbineneinlass zuführbar. Jeder Abgassammelstrang ist während des Motorbremsbetriebes durch eine Absperrklappe vollständig absperrbar. In einer Schließstellung liegen die Absperrklappen an einer Innenwandung der Motorbremsvorrichtung an.

Ferner offenbart die EP 3 236 052 A1 ein Abgasdruckregelventil, das die Ableitung von Abgasen aus dem gesamten Querschnittsbereich der Abgasleitung ermöglicht, wenn das Abgasdruckregelventil vollständig geöffnet ist. Hierzu ist ein Abgasdruckregelventil an einer Gasleitung montiert, die einen ersten Querschnitt aufweist, in den Abgase vom Motor einströmen, und die stromaufwärts oder stromabwärts eines Schalldämpfers angeordnet ist. Das Abgasdrucksteuerventil umfasst: ein Gehäuse mit einer ersten Querschnittsfläche und einer zweiten Querschnittsfläche, die größer als die erste Fläche ist und mit den Gasleitungen verbunden ist, um das Abgas zu leiten; eine Ventilachse, die entlang des zweiten Querschnitts gelagert ist, der sich von der Strömungsrichtung aus gesehen nicht mit dem ersten Querschnitt überschneidet, wobei die Ventilachse von dem Gehäuse in einer Querrichtung zur Strömungsrichtung gelagert ist; und ein Ventilelement, das mit der Ventilachse verbunden ist und die Strömung des Abgases einstellt, das mit der Gasleitung in Verbindung steht.

Ähnliche Konfigurationen sind auch aus der DE 10 2017 109062 A1, der DE 195 00 475 A1, der WO 2017/066167 A1 und der DE 199 14 213 A1 bekannt.

Die US 2003/0234378 A1 offenbart ein Abgasregelventil. Das Abgasregelventil umfasst ein Ventilgehäuse mit mindestens einem Einlass, mindestens einem Auslass und einem Strömungskanal, der sich dazwischen erstreckt. Ein Ventilsitz grenzt an eine Öffnung in der mindestens einen Auslass an.

Nachteilig an bekannten Lösungen kann sein, dass die Anschläge und/oder Dichtflächen für die Absperrklappen in den Motorbremsvorrichtungen aufwendig integriert werden müssen.

Der Erfindung liegt die Aufgabe zu Grunde, eine alternative und/oder verbesserte Vorrichtung zur Abgasführung mit einer Abgasabsperrklappenvorrichtung zu schaffen.

Die Aufgabe wird gelöst durch die Merkmale gemäß dem unabhängigen Anspruch 1. Vorteilhafte Weiterbildungen sind in den abhängigen Ansprüchen und der Beschreibung angegeben.

Die Erfindung schafft eine Vorrichtung zur Abgasführung für eine Brennkraftmaschine. Die Vorrichtung weist ein Abgasrohr, vorzugsweise einen Abgaskrümmer, auf. Die Vorrichtung weist eine Abgasabsperrklappenvorrichtung, nämlich eine Abgasbremsklappenvorrichtung, aufweisend mindestens eine (z. B. zwei) bewegbare, vorzugsweise schwenkbare, Absperrklappe (z. B: Bremsklappe) auf. Die Abgasabsperrklappenvorrichtung ist stromabwärts oder stromaufwärts des Abgasrohrs angeordnet. Die mindestens eine Absperrklappe liegt in einer Schließstellung der mindestens einen Absperrklappe an mindestens einer Anschlagfläche des Abgasrohrs an.

Die Vorrichtung kann den Vorteil bieten, dass innerhalb der Abgasabsperrklappenvorrichtung kein Anschlag und/oder keine Dichtfläche für die Absperrklappe aufwendig integriert werden muss. Stattdessen kann einfach eine Fläche eines stromaufwärts oder stromabwärts angeordneten Abgasrohrs als Anschlagfläche für die Absperrklappe verwendet werden. Diese Anschlagfläche am Abgasrohr kann vorzugsweise bereits zu einem anderen Zweck ohnehin am Abgasrohr vorhanden sein, z. B. als Flanschfläche zum Anflanschen der Abgasabsperrklappenvorrichtung an das Abgasrohr. Damit kann eine Anschlagfläche für die Absperrklappe funktionsintegriert im Abgasrohr vorgesehen sein, sodass keine separate Anschlagfläche vorgesehen werden muss.

Zweckmäßig kann die mindestens eine Anschlagfläche einen Ventilsitz für die mindestens eine Absperrklappe bilden.

Bspw. kann die mindestens eine Absperrklappe bewegbar in mindestens einem Abgaskanal der Abgasabsperrklappenvorrichtung angeordnet sein. Vorzugsweise kann sich der mindestens eine Abgaskanal zwischen einer Einlassöffnung der Abgasabsperrklappenvorrichtung und einer Auslassöffnung der Abgasabsperrklappenvorrichtung erstrecken.

Zweckmäßig sind die Abgasabsperrklappenvorrichtung und das Abgasrohr als separate Bauteile ausgebildet.

Es ist möglich, dass mindestens ein Abgaskanal der Abgasabsperrklappenvorrichtung mit mindestens einem Abgaskanal des Abgasrohrs (z. B. direkt und/oder angrenzend) in Fluidverbindung steht.

In einem Ausführungsbeispiel liegt die mindestens eine Absperrklappe abdichtend an der mindestens einen Anschlagfläche in der Schließstellung an, sodass vorzugsweise kein Abgas vom Abgasrohr in die Abgasabsperrklappenvorrichtung strömt. Die Anschlagfläche kann somit als eine Dichtfläche zur Absperrklappe wirken. Damit kann der Abgasstrom bspw. vollständig blockiert werden. So können ein hoher Abgasgegendruck und somit eine hohe Motorbremsleistung erzielt werden.

In einem weiteren Ausführungsbeispiel überlappt die mindestens eine Absperrklappe mindestens eine Auslassöffnung oder Einlassöffnung des Abgasrohrs teilweise, vollständig und/oder ringförmig, betrachtet entgegen einer Strömungsrichtung des Abgases. Die Überlappung kann bewirken, dass die Absperrklappe an einer die Auslassöffnung oder Einlassöffnung umgebenden Fläche in der Schließstellung anliegen kann, die somit als die Anschlagfläche für die Absperrklappe dient.

In einem weiteren Ausführungsbeispiel verschließt die mindestens eine Absperrklappe in der Schließstellung mindestens eine Auslassöffnung oder Einlassöffnung des Abgasrohrs, vorzugsweise vollständig.

In einer Ausführungsform ist die mindestens eine Anschlagfläche ringförmig oder ringsegmentförmig. Alternativ oder zusätzlich umgibt und/oder begrenzt die mindestens eine Anschlagfläche mindestens eine Auslassöffnung oder Einlassöffnung des Abgasrohrs zumindest teilweise oder vollständig. Zweckmäßig kann so eine ohnehin vorhandene Begrenzung der Auslassöffnung oder Einlassöffnung des Abgasrohrs als Anschlagfläche genutzt werden.

Erfindungsgemäß ist die mindestens eine Anschlagfläche in einer Flanschfläche (z. B. Stirnfläche) des Abgasrohrs umfasst, an der die Abgasabsperrklappenvorrichtung angeflanscht ist. Damit kann die Anschlagfläche funktionsintegriert in der ohnehin vorhandenen Flanschfläche umfasst sein.

Erfindungsgemäß weist das Abgasrohr zwei Auslassöffnungen oder Einlassöffnungen auf und die Absperrklappenvorrichtung weist zwei Absperrklappen auf, die den zwei Auslassöffnungen oder Einlassöffnungen zugeordnet sind.

In einer weiteren Ausführungsvariante weist die Abgasabsperrklappenvorrichtung ferner eine Montageöffnung zum Einführen der mindestens einen Absperrklappe in die Abgasabsperrklappenvorrichtung und vorzugsweise einen lösbaren Deckel zum Verschließen der MontageÖffnung auf. Die Montageöffnung kann eine Montage der Absperrklappe(n) vereinfachen, da diese nicht aufwendig durch eine Einlass- oder Auslassöffnung der Abgasabsperrklappenvorrichtung eingeführt werden müssen. Zweckmäßig kann die Montageöffnung ermöglichen, dass bereits vormontierte oder integral-einstückige Einheiten aus mehreren Absperrklappen gemeinsam durch die Montageöffnung in die Abgasabsperrklappenvorrichtung einführbar sind.

In einer Weiterbildung weist der lösbare Deckel einen Stegbereich auf, der eine Schwenkwelle und/oder einen Bereich zwischen zwei Absperrklappen z. B. teilweise umgreift, vorzugsweise zum Verhindern eines Gasübertritts zwischen zwei Abgaskanälen der Abgasabsperrklappenvorrichtung. Damit kann eine Funktionsintegration in dem Deckel ermöglicht werden, der einerseits die Montageöffnung verschließen kann und andererseits zur Abdichtung zwischen mehreren Abgaskanälen in der Abgasabsperrklappenvorrichtung verwendet werden kann.

In einem Ausführungsbeispiel weist die mindestens eine Absperrklappe einen Klappenteil zum Bewirken eines Abgasgegendrucks und/oder einen Lagerbereich zum schwenkbaren Lagern der Absperrklappe, vorzugsweise zum Verbinden mit einer Schwenkwelle, auf. Alternativ oder zusätzlich ist die Montageöffnung so dimensioniert, dass die mindestens eine Absperrklappe mit dem Klappenteil und/oder dem Lagerbereich einführbar ist und/oder dass mindestens zwei Absperrklappen gemeinsam einführbar sind.

In einem weiteren Ausführungsbeispiel weist die Abgasabsperrklappenvorrichtung mindestens einen Abgaskanal auf, der zweckmäßig von der mindestens einen Absperrklappe verschließbar ist, und/oder die Montageöffnung ist radial bezüglich des mindestens einen Abgaskanals angeordnet. Damit können die Absperrklappen radial von außen durch die Montageöffnung in den Abgaskanal eingesetzt und dort montiert werden.

Es ist auch möglich, dass die Abgasabsperrklappenvorrichtung mindestens eine Einlassöffnung aufweist, die so dimensioniert ist, dass die mindestens eine Absperrklappe mit dem Klappenteil und/oder dem Lagerbereich zur Montage einführbar ist. Eine derartige Ausführung kann zweckmäßig verwendet werden, wenn die Absperrklappen einzeln zu montieren sind.

In einer Ausführungsform weist die Abgasabsperrklappenvorrichtung ferner eine Schwenkwelle zum Verschwenken der mindestens einen Absperrklappe auf. Die Schwenkwelle kann bspw. integral-einstückig mit der mindestens einen Absperrklappe als eine Einheit hergestellt sein und die Einheit kann für deren Montage bspw. gecrackt werden. An den Trennstellen kann ein sicherer Formschluss beim späteren Fügen in der Abgasabsperrklappenvorrichtung erzielt werden. Die gecrackten Einzelteile können einfacher in den Abgaskanal eingeführt werden und/oder eine entsprechende Montageöffnung kann kleiner dimensioniert werden.

In einer Weiterbildung ist die Schwenkwelle als eine Hohlwelle gebildet und Einzelteile der gecrackten Einheit sind durch eine in die Hohlwelle einführbare Schraube zusammenfügbar. Somit können bspw. die gecrackten Einzelteile auf einfache Weise gefügt werden, sobald sie in der Abgasabsperrklappenvorrichtung positioniert wurden.

Zweckmäßig kann die Hohlwelle ein Innengewinde zumindest in einem Lagerbereich einer äußeren Absperrklappe oder in einem äußeren Wellenstück aufweisen, in das die Schraube zum Fügen der gecrackten Einzelteile einschraubbar ist. Alternativ könnte bspw. auch eine Mutter zum Zusammenfügen verwendet werden.

In einer weiteren Ausführungsform ist die Einheit an einer oder mehreren vorbestimmten Trennstellen gecrackt, vorzugsweise in oder (z. B. einseitig oder beidseitig) an einem Lagerbereich der mindestens einen Absperrklappe. Damit kann bspw. ein Einführen der Absperrklappen in die Abgasabsperrklappenvorrichtung bei der Montage und ein Zusammenfügen der gecrackten Einzelteile vereinfacht werden.

In einer Ausführungsvariante weist die Abgasabsperrklappenvorrichtung eine mehrteilige, als Hohlwelle ausgebildete Schwenkwelle auf, deren Einzelteile vorzugsweise durch eine in die Hohlwelle einführbare Schraube miteinander verbindbar sind.

In einer Weiterbildung weist die mindestens eine Absperrklappe einen Lagerbereich auf, der zweckmäßig einen hohlen Wellenabschnitt der Schwenkwelle bildet. Es ist möglich, dass der Lagerbereich drehfest mit mindestens einem weiteren hohlen Wellenabschnitt der Schwenkwelle verbunden ist, vorzugsweise mittels Formschluss (z. B. Zapfenverbindung oder Vielzahnverbindung).

Bspw. kann der Formschluss an einander zugewandten Boden- oder Grundflächen des Lagerbereichs und des weiteren hohlen Wellenabschnitts vorgesehen sein. Die Boden- oder Grundflächen können in einer Ebene senkrecht zu einer Längsachse der Schwenkwelle ausgerichtet sein.

Zweckmäßig kann die Abgasabsperrklappenvorrichtung stromaufwärts von einer Abgasturbine eines Turboladers angeordnet sein, z. B. direkt stromaufwärts davon.

Vorzugsweise kann Abgasabsperrklappenvorrichtung an dem Abgasrohr montiert sein, z. B. lösbar mittels einer oder mehrerer Schrauben, die zweckmäßig Flanschflächen des Abgasrohrs und der Abgasabsperrklappenvorrichtung aneinander pressen.

Zweckmäßig kann die Abgasabsperrklappenvorrichtung zur Steigerung der Motorbremsleistung der Brennkraftmaschine ausgebildet sein, vorzugsweise durch teilweises oder vollständiges Verschließen eines oder mehrerer Abgaskanäle in einer Schließstellung der mindestens einen Absperrklappe.

In einem weiteren Ausführungsbeispiel ist die mindestens eine Absperrklappe in einer Öffnungsstellung teilweise außerhalb der Abgasabsperrklappenvorrichtung und/oder innerhalb eines Abgaskanals eines stromabwärts der Absperrklappenvorrichtung angeordneten Turboladergehäuses positioniert. Dadurch wird ein kompaktes Ausführungsbeispiel ermöglicht. Bspw. kann sich die mindestens eine Absperrklappe, vorzugweise ein Klappenteil der mindestens einen Absperrklappe, in einer Öffnungsstellung teilweise in einen Einlassbereich eines Abgaskanals eines Turboladergehäuses, das stromabwärts der Abgasabsperrklappenvorrichtung angeordnet ist, hineinerstrecken. Es ist zusätzlich möglich, dass an einer Umfangswandung des Einlassbereichs zweckmäßig eine Freistellung oder Ausnehmung für die mindestens eine Absperrklappe angeordnet ist.

Die Erfindung betrifft auch ein Kraftfahrzeug, vorzugsweise ein Nutzfahrzeug (z. B. Lastkraftwagen oder Omnibus), mit einer Vorrichtung wie hierin offenbart.

Es ist auch möglich, die Vorrichtung wie hierin offenbart für Personenkraftwagen, Großmotoren, geländegängige Fahrzeuge, stationäre Motoren, Marinemotoren usw. zu verwenden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Schnittansicht einer beispielhaften Vorrichtung zur Abgasführung für eine Brennkraftmaschine gemäß der vorliegenden Offenbarung;
- Figur 2: eine weitere Schnittansicht der beispielhaften Vorrichtung zur Abgasführung;
- Figur 3: eine perspektivische Ansicht der beispielhaften Vorrichtung zur Abgasführung;
- Figur 4: eine perspektivische Ansicht einer beispielhaften Absperrklappenvorrichtung der Vorrichtung zur Abgasführung;
- Figur 5: eine Schnittansicht der beispielhaften Absperrklappenvorrichtung;
- Figur 6: eine perspektivische Montagezeichnung der beispielhaften Absperrklappenvorrichtung;
- Figur 7: eine perspektivische Montagezeichnung einer beispielhaften Schwenkwelle und zweier beispielhafter Absperrklappen der Absperrklappenvorrichtung;
- Figur 8: eine perspektivische Ansicht einer weiteren beispielhaften Schwenkwelle und zweier weiterer beispielhafter Absperrklappe der Absperrklappenvorrichtung;
- Figur 9: eine Schnitt-Montagezeichnung einer weiteren beispielhaften Absperrklappenvorrichtung; und
- Figur 10: eine weitere Schnittansicht der beispielhaften Vorrichtung zur Abgasführung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

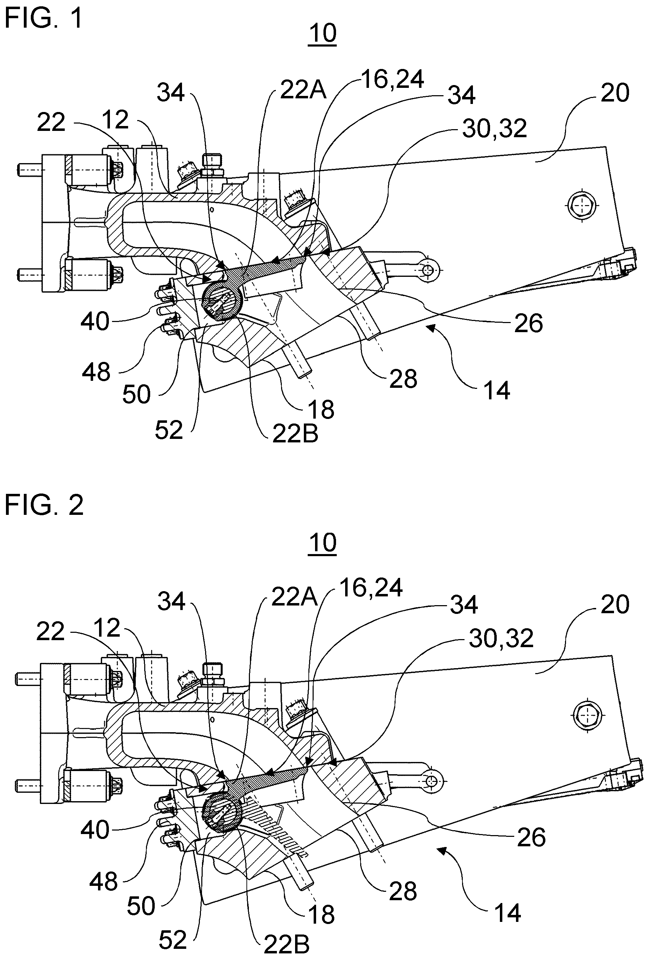

Die Figuren 1 bis 3 zeigen eine Vorrichtung 10 zur Abgasführung für eine Brennkraftmaschine. Die Brennkraftmaschine kann beispielsweise in einem Kraftfahrzeug, vorzugsweise einem Nutzfahrzeug (zum Beispiel Lastkraftwagen oder Omnibus), zum Antreiben des Kraftfahrzeugs umfasst sein. Im Betrieb der Brennkraftmaschine kann die Vorrichtung 10 zum Bewirken einer (internen) Motorbremse, zum Beispiel auf Gefällestrecken, einen Abgasgegendruck einstellen oder erhöhen. Dadurch kann eine höhere Motorbremsleistung erzielt werden.

Nachfolgend ist die beispielhafte Vorrichtung 10 unter Bezugnahme auf die Figuren 1 bis 5 beschrieben.

Die Vorrichtung 10 weist ein Abgasrohr 12 und eine Abgasabsperrklappenvorrichtung 14, vorzugsweise Abgasbremsklappenvorrichtung, auf. Die Abgasabsperrklappenvorrichtung 14 ist an dem Abgasrohr 12 angeflanscht.

Das Abgasrohr 12 weist mindestens eine Einlassöffnung und mindestens eine Auslassöffnung 16 auf, die zumindest teilweise durch einen oder mehrere innenliegende Kanäle zum Führen von Abgas miteinander verbunden sind. Wie dargestellt ist, kann das Abgasrohr 12 zweiflutig sein, z. B. mit einer zweiflutigen Abgassammelleitung und einem zweiflutigen Abgaskrümmer. Die zweiflutige Abgassammelleitung kann an einem Mehrzylinder-Zylinderkopf oder mehreren Einzelzylinder-Zylinderköpfen befestigt sein, um Abgas gruppenweise von mehreren Zylindern der Brennkraftmaschine in zwei getrennten Abgasfluten aufnehmen. Wie dargestellt ist, kann bspw. eine erste Abgasflut Abgas von mehreren Zylindern einer Brennkraftmaschine aufnehmen und eine zweite Abgasflut kann Abgas von mehreren weiteren Zylindern einer Brennkraftmaschine aufnehmen. Der zweiflutige Abgaskrümmer kann bspw. zwei Auslassöffnung 16 zum Abführen von Abgas aus der zweiflutigen Abgassammelleitung aufweisen.

Es ist möglich, dass das Abgasrohr 12 anders als abgebildet ausgebildet ist. Zum Beispiel kann das Abgasrohr 12 nur einflutig sein und/oder keinen Sammelbereich aufweisen und/oder keinen Krümmerbereich aufweisen. Bspw. kann das Abgasrohr 12 auch als ein einfaches Rohrstück ausgeführt sein.

Es ist auch möglich, dass das Abgasrohr 12 an einer anderen Position bspw. nicht direkt stromabwärts von den Zylindern der Brennkraftmaschine angeordnet ist, z. B. stromabwärts von einer Abgasturbine eines Turboladers der Brennkraftmaschine, in einem Bypass einer Turbine eines Turboladers der Brennkraftmaschine, als Auslassrohr (z. B. Diffusor) einer Abgasturbine eines Turboladers oder als Einlassrohr einer Abgasturbine eines Turboladers der Brennkraftmaschine.

Die Abgasabsperrklappenvorrichtung 14 ist stromabwärts von dem Abgasrohr 12 angeordnet. Zweckmäßig kann die Abgasabsperrklappenvorrichtung 14 direkt stromaufwärts von einer Abgasturbine eines Turboladers angeordnet sein. Es ist bspw. auch möglich, dass die Abgasabsperrklappenvorrichtung 14 bspw. in einem Bypass der Abgasturbine oder stromabwärts der Abgasturbine angeordnet ist. Es kann allerdings auch möglich sein, dass die Abgasabsperrklappenvorrichtung 14 stromaufwärts von dem Abgasrohr 12 angeordnet ist.

Die Abgasabsperrklappenvorrichtung 14 weist einen Abgasführungsteil 18 und einen Betätigungsteil 20 auf. Der Betätigungsteil 20 dient zum Betätigen von einer oder mehreren Absperrklappen 22, vorzugsweise Bremsklappen, im Abgasführungsteil 18. Die Absperrklappen 22 können jeweils einen Klappenteil 22A zum Bewirken eines Abgasgegendrucks und einen Lagerbereich 22B zum vorzugsweise schwenkbaren Lagern der Absperrklappen 22 aufweisen.

Im dargestellten Ausführungsbeispiel ist der Abgasführungsteil 18 zweiflutig mit zwei (Abgas-) Einlassöffnungen 24, zwei Absperrklappen 22, zwei Abgaskanälen 26 und zwei Auslassöffnungen 28 ausgebildet, zum Beispiel zum Zuführen von Abgas zu einer zweiflutigen Abgasturbine (nicht dargestellt) eines Turboladers der Brennkraftmaschine. Es ist allerdings bspw. auch möglich, dass der Abgasführungsteil 18 lediglich einflutig ausgebildet ist, mit lediglich einer (Abgas-) Einlassöffnung 24, einer Absperrklappe 22, einem Abgaskanal 26 und einer Auslassöffnung 28.

Die Einlassöffnungen 24 des Abgasführungsteils 18 liegen den Auslassöffnungen 16 des Abgasrohrs 12 gegenüber. Die Abgaskanäle 26 erstrecken sich jeweils zwischen einer der Einlassöffnungen 24 und einer der Auslassöffnungen 28. In den Abgaskanälen 26 ist jeweils eine der Absperrklappen 22 zum Versperren, zum teilweisen Versperren oder zum Freigeben der Abgaskanäle 26 oder der Einlassöffnungen 24 schwenkbar angeordnet. Es ist auch möglich, dass kein Schwenkmechanismus zum Verschwenken der Absperrklappe 22 vorgesehen ist, sondern ein anderer Bewegungsmechanismus zum Bewegen der Absperrklappe 22, zum Beispiel ein translatorischer Bewegungsmechanismus.

Der Abgasführungsteil 18 ist an dem Abgasrohr 12 montiert, vorzugsweise angeflanscht. Beispielsweise können mehrere Schrauben vorgesehen sein, die den Abgasführungsteil 18 und das Abgasrohr 12 aneinander befestigten. Das Abgasrohr 12 und der Abgasführungsteil 18 kontaktieren einander an deren jeweiligen Flanschflächen 30 und 32. Die Flanschfläche 30 des Abgasrohrs 12 umgibt und begrenzt die Auslassöffnungen 16. Die Flanschfläche 32 des Abgasführungsteils 18 umgibt und begrenzt die Einlassöffnungen 24. Die Flanschflächen 30, 32 können miteinander ausgerichtete Schraubenlöcher aufweisen, um den Abgasführungsteil 18 und das Abgasrohr 12 aneinander zu befestigten.

Das Abgasrohr 12 und der Abgasführungsteil 18 sind so aneinander angepasst, das die Flanschfläche 30 des Abgasrohrs 12 als eine Anschlagfläche für die Absperrklappen 22 in deren Schließstellung dient. In der Schließstellung werden die Absperrklappen 22 mittels des Betätigungsteils 20 gegen die Flanschfläche 30 gedrückt, sodass die Auslassöffnungen 16 von den Absperrklappen 22 verschlossen sind. Die Absperrklappen 22 liegen vorzugsweise bündig an der Flanschfläche 30 an, sodass sich auch eine Dichtwirkung ergibt und im Wesentlichen kein Abgas in die Abgaskanäle 26 des Abgasführungsteils 18 strömt. Daher kann auf separate Anschläge oder Dichtflächen für die Absperrklappen 22 in dem Abgasführungsteil 18 verzichtet werden.

Im Einzelnen kann die Flanschfläche 30 zwei Anschlagflächen 34 für die beiden Absperrklappen 22 aufweisen. Die Anschlagflächen 34 können jeweils eine der Auslassöffnungen 16 ringförmig umgeben und begrenzen. Die Anschlagflächen 34 können bspw. eine Ringbreite von mehreren Millimetern aufweisen. In anderen Worten, die Absperrklappen 22 können sich jeweils über mehrere Millimeter über die jeweilige Auslassöffnung 16 hinaus erstrecken, d.h. die Auslassöffnungen um mehrere Millimeter überlappen. Eine Klappenkontur der Absperrklappen 22 ist so gestaltet, dass sie im eingebauten Zustand eine Überlappung von mehreren Millimetern gegenüber der Auslassöffnung 16 erreicht und eine Dichtfläche entstehen kann.

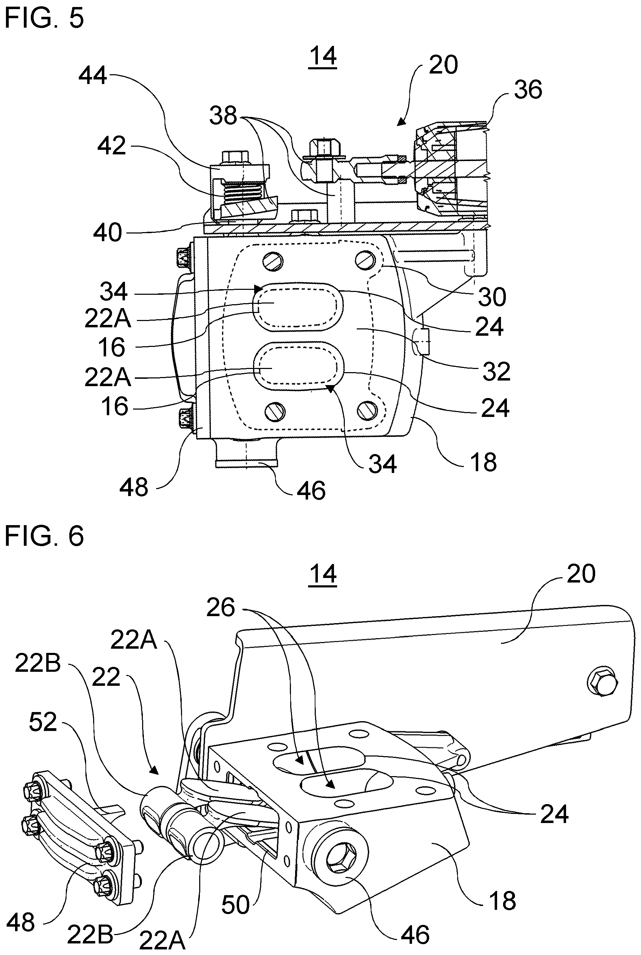

Zur Verdeutlichung sind die Flanschfläche 30 und die Auslassöffnungen 16 in Figur 5 in Strichlinien bezüglich der Flanschfläche 32 des Abgasführungsteils 18 dargestellt. Die Anschlagflächen 34 befinden sich zwischen dem Außenumfang der Absperrklappen 22 und dem Innenumfang der Einlassöffnungen 24, allerdings auf Seiten des Abgasrohrs 12 (nicht in Figur 5 dargestellt). In der Schließstellung werden die Absperrklappen 22 von dem Betätigungsteil 20 gegen die Anschlagflächen 34 gedrückt.

Die Absperrklappen 22 sind zwischen der Schließstellung und einer Öffnungsstellung bewegbar, vorzugsweise schwenkbar. In der Schließstellung können die Absperrklappen 22 die Auslassöffnung 16 des Abgasrohrs 12 abdichten. Kein Abgas strömt durch die Abgaskanäle 26. Die Schließstellung ist bspw. in Figur 1 und 2 dargestellt.

In der Öffnungsstellung können die Absperrklappen 22 die Auslassöffnung 16 des Abgasrohrs 12 freigeben (öffnen). Abgas kann in die Abgaskanäle 26 einströmen und bspw. zu einer Abgasturbine geleitet werden. In Figur 2 ist die Öffnungsstellung durch eine schraffierte Absperrklappe dargestellt.

In Zwischenstellungen zwischen der Öffnungsstellung und der Schließstellung kann ein reduzierter Abgasstrom durch die teilweise geöffneten Absperrklappen 22 in die Abgaskanäle 26 einströmen und bspw. zu einer Abgasturbine geleitet werden.

In Ausführungsbeispielen, bei denen das Abgasrohr stromabwärts des Abgasführungsteils angeordnet ist, kann mindestens eine Absperrklappe mindestens eine Einlassöffnung des Abgasrohrs in der Schließstellung verschließen, sodass vorzugsweise kein Abgas aus dem Abgasführungsteil in das Abgasrohr strömt. Analog dem oben beschriebenen Ausführungsbeispiel kann die mindestens eine Absperrklappe die Einlassöffnung teilweise oder vollständig überlappen (betrachtet in einer Strömungsrichtung des Abgases), die Anschlagfläche kann die Einlassöffnung umgeben oder begrenzen, vorzugsweise ringförmig oder ringsegmentförmig, usw.

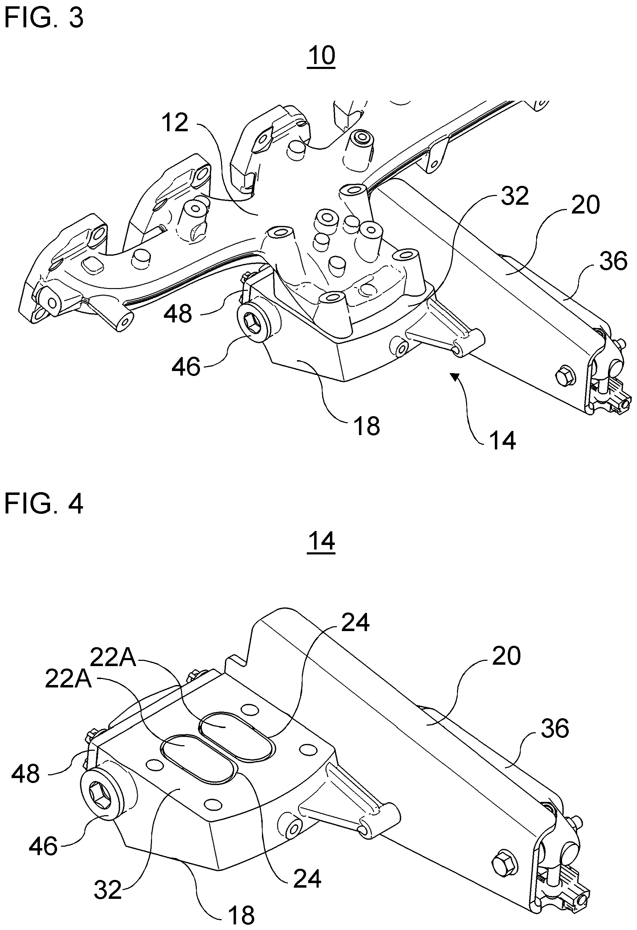

Die Bewegung der Absperrklappen 22 wird durch den Betätigungsteil 20 bewirkt. Der Betätigungsteil 20 kann bspw. einen Druckluftzylinder 36 (siehe Figuren 3 bis 5) aufweisen, um die Absperrklappe 22 zu betätigen. Eine translatorische Bewegung des Druckluftzylinders 36 kann beispielsweise über ein Gestänge 38 (nur teilweise in Figur 5 dargestellt) auf eine Schwenkwelle 40 zur Drehung der Schwenkwelle 40 übertragen werden. Das Gestänge 38 kann bspw. eine erste Stange und eine zweite Stange aufweisen, die gelenkig, vorzugsweise schwenkbar, miteinander verbunden sind. Die erste Stange kann an einem bewegbaren Kolben des Druckluftzylinders 36 befestigt sein. Die zweite Stange kann an der Schwenkwelle 40 befestigt sein.

Die Schwenkwelle 40 kann drehfest mit den Absperrklappen 22 verbunden sein, zum Beispiel formschlüssig. Beispielsweise kann die Schwenkwelle 40 mittels einer Passfeder, wie in den Figuren 1 und 2 dargestellt ist, drehfest mit den Absperrklappen 22 verbunden sein. Durch Drehung der Schwenkwelle 40 können die Absperrklappen 22 geöffnet oder geschlossen werden. Alternativ kann der Betätigungsteil 20 beispielsweise einen Hydraulikzylinder oder einen elektrischen Motor, zum Beispiel einen elektrischen Stellmotor, zur Drehung der Schwenkwelle 40 aufweisen.

Es ist möglich, dass ein Federpaket 42 (siehe Figur 5) oder ein anderes elastisches Element vorgesehen ist, um die Schwenkwelle 40 an Lager (z. B. Gleitlager) für die Schwenkwelle 40 innerhalb des Abgasführungsteils 18 zu pressen. Damit kann zweckmäßig eine Leckage von Abgas verhindert und eine Dichtheit gewährleistet werden. Um eine Vorspannung des Federpakets 42 zu ermöglichen, kann bspw. ein Gegenhalter 44 beabstandet zu der zweiten Stange des Gestänges 38 angeordnet sein. Das Federpaket 42 kann bspw. gegen die zweite Stange des Gestänges 38 und somit gegen die daran befestigte Schwenkwelle 40 drücken.

Wie in den Figuren 3 bis 6 beispielhaft dargestellt ist, kann auf einer dem Betätigungsteil 20 entgegengesetzten Seite des Abgasführungsteils 18 eine Verschlussschraube 46 angeordnet sein, um eine Bohrung zur Anordnung eines Lagers (z. B. Gleitlagers) für die Schwenkwelle 40 vorzugsweise gasdicht zu verschließen.

Wie in den Figuren 1 bis 6 dargestellt ist kann der Abgasführungsteil 18 einen Deckel 48 aufweisen. Der Deckel 48 kann eine Montageöffnung 50 des Abgasführungsteils 18 lösbar verschließen. Durch die Montageöffnung 50 können die Absperrklappen 22 in den Abgasführungsteil 18 eingeführt und in den Abgaskanälen 26 positioniert werden. Nach der Montage der Absperrklappen 22 kann die Montageöffnung 50 durch den Deckel 48 verschlossen werden. Zur Befestigung des Deckels 48 können beispielsweise lösbare Schrauben verwendet werden, wie dargestellt ist.

Die Montageöffnung 50 kann radial bezüglich eines Verlaufs der Abgaskanäle 26 angeordnet. Die Montageöffnung 50 ist so dimensioniert, dass die Absperrklappen 22 umfassend die Lagerbereiche 22B und die Klappenteile 22A vollständig hindurchführbar ist. Das Anordnen des Deckels 48 und der Montageöffnung 50 kann eine Montage der Absperrklappen 22 vereinfachen, insbesondere in einem Fall, in dem mehrere Absperrklappen 22 als eine gefügte oder integral-einstückige Einheit gemeinsam zu montieren sind.

Der Deckel 48 kann einen Stegbereich 52 aufweisen (siehe Figuren 1, 2 und 6). Der Stegbereich 52 kann einen zylindrischen Bereich zwischen den Lagerbereichen 22B der Absperrklappen 22 mit einem geringem Spaltmaß teilweise umgreifen. Der Stegbereich 52 kann bspw. eine kreiszylindermantelsegmentförmige Fläche zum Umfassen des zylindrischen Bereichs aufweisen. Die kreiszylindermantelsegmentförmige Fläche kann den Absperrklappen 22 zugewandt sein. Das Spaltmaß (z. B. ca. ≤ 1 bis 2 mm, vorzugsweise ≤ 0,5 mm) kann so gewählt sein, dass ein Gasübertritt zwischen den Abgaskanälen 26 im Abgasführungsteil 18 im Wesentlichen verhindert wird.

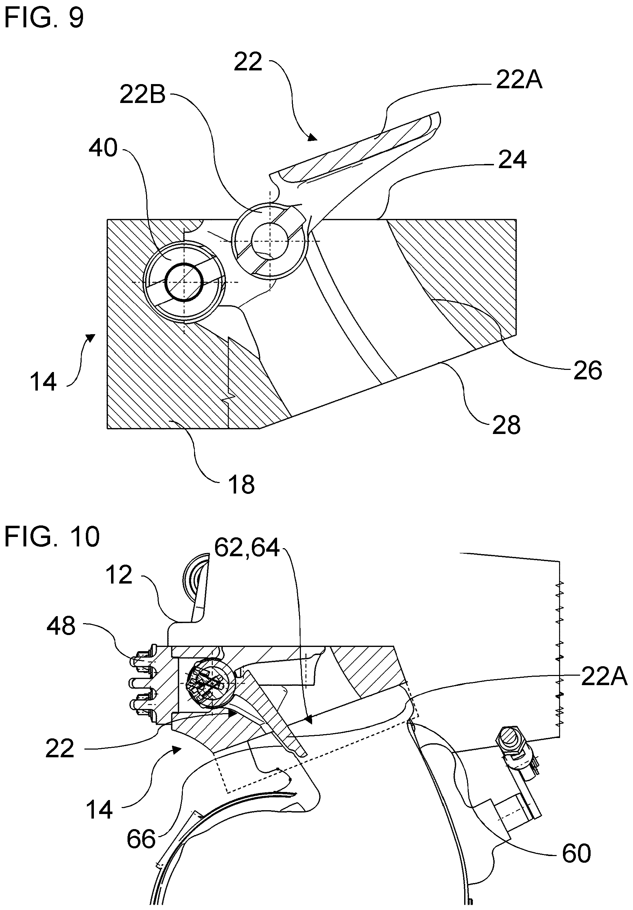

Alternativ oder zusätzlich zu dem Deckel 48 und der Montageöffnung 50 ist es allerdings beispielsweise auch möglich, dass die Absperrklappen 22 jeweils einzelnen durch die Einlassöffnungen 24 eingeführt werden (siehe Figur 9). Sofern ein Einfädeln durch die Einlassöffnungen 24 vorgenommen wird, ist es nicht notwendig, die Montageöffnung 50 und den Deckel 48 vorzusehen.

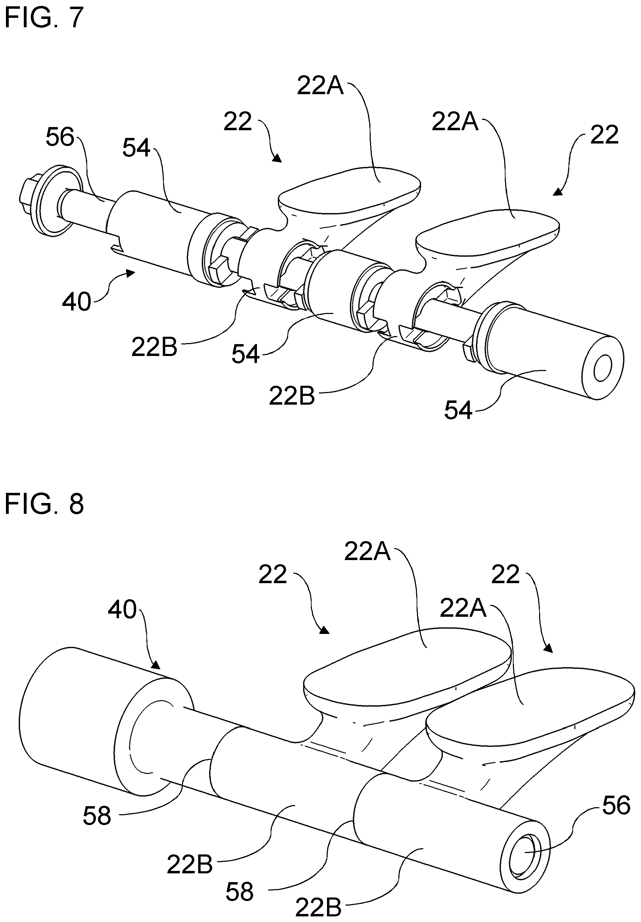

Die Figur 7 und die Figur 8 zeigen weitere Ausführungsbeispiele zur Verbindung der Schwenkwelle 40 und der Absperrklappen 22.

In Figur 7 ist gezeigt, dass die Absperrklappen 22 als Einzelteile ausgeführt sind. Die Absperrklappen 22, vorzugsweise die Lagerbereiche 22B der Absperrklappen 22, können mit mehreren Wellenstücken oder Wellenabschnitten 54 der Schwenkwelle 40 drehfest und formschlüssig verbunden werden, z. B. mittels einer Zapfenverbindung oder einer Vielzahnverbindung. Die Schwenkwelle 40 kann als eine Hohlwelle ausgeführt sein, sodass mittels einer Schraube 56 die Wellenabschnitte 54 und die ebenfalls als hohle Wellenabschnitte ausgeführten Lagerbereiche 22B miteinander verbunden werden können, nachdem die Absperrklappen 22 in den Abgaskanälen positioniert wurden. Bspw. kann die Schraube 56 in ein Innengewinde im äußersten Wellenabschnitt 54 eingeschraubt werden.

In Figur 8 ist gezeigt, dass die Schwenkwelle 40 und die Absperrklappe(n) 22 einstückig-integral als eine Einheit hergestellt werden können (z. B. mittels Urformen, wie Gießen, Schmieden oder Drucken). Die Einheit kann dann an vorbestimmten Trennstellen 58 gecrackt werden, um eine Montage im Abgasführungsteil 18 zu ermöglichen, z. B. über die Einlassöffnungen 24. Die Trennstellen zum Cracken können bspw. einseitig oder beidseitig der Lagerbereiche 22B der Absperrklappen 22 angeordnet sein. Nach dem Einführen in die Abgaskanäle 26 können die gecrackten Absperrklappen 22 dann wieder formschlüssig zusammengefügt werden. Zum Beispiel kann die Schwenkwelle 40 als eine Hohlwelle gebildet sein und die Einzelteile der gecrackten Einheit können durch eine in die Hohlwelle einführbare Schraube 56 zusammengefügt werden. Bspw. kann die Schraube 56 in ein Innengewinde im Lagerbereich 22B der äußeren Absperrklappe 22 eingeschraubt werden.

Figur 10 zeigt eine weitere, besonders kompakte Ausführungsvariante. Hierbei sind die Absperrklappenvorrichtung 14 und ein stromabwärts davon angeordnetes Turboladergehäuse 60 so ausgebildet, dass sich die Absperrklappe 22, vorzugweise der Klappenteil 22A, in einer Öffnungsstellung teilweise in einen Einlassbereich 62 eines Abgaskanals 64 des Turboladergehäuse 60 hineinerstreckt. Wie dargestellt ist, kann an einer Umfangswandung des Einlassbereichs 62 zweckmäßig eine Freistellung oder Ausnehmung 66 für die Absperrklappe 22 angeordnet sein.

Somit kann eine Bauhöhe der Absperrklappenvorrichtung 14 erheblich reduziert werden gegenüber einer Lösung, bei der die Absperrklappe 22 in der Öffnungsstellung vollständig in der Absperrklappenvorrichtung 14 positioniert ist (angedeutet in Figur 10 mit einer gestrichelten Linie).

Die Erfindung ist nicht auf die vorstehend beschriebenen bevorzugten Ausführungsbeispiele beschränkt. Vielmehr ist eine Vielzahl von Varianten und Abwandlungen möglich, die in den beanspruchten Schutzbereich fallen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Abgasrohrs und/oder der Abgasabsperrklappenvorrichtung des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Vorrichtung zur Abgasführung
- 12: Abgasrohr
- 14: Abgasabsperrklappenvorrichtung
- 16: Auslassöffnung
- 18: Abgasführungsteil
- 20: Betätigungsteil
- 22: Absperrklappe
- 22A: Klappenteil
- 22B: Lagerbereich
- 24: Einlassöffnung
- 26: Abgaskanal
- 28: Auslassöffnung
- 30: Flanschfläche
- 32: Flanschfläche
- 34: Anschlagfläche
- 36: Druckluftzylinder
- 38: Gestänge
- 40: Schwenkwelle
- 42: Federpaket
- 44: Gegenhalter
- 46: Verschlussschraube
- 48: Deckel
- 50: Montageöffnung
- 52: Stegbereich
- 54: Wellenabschnitt
- 56: Schraube
- 58: Trennstelle zum Cracken
- 60: Turboladergehäuse
- 62: Einlassbereich
- 64: Abgaskanal
- 66: Ausnehmung

## Patentansprüche

1. Vorrichtung (10) zur Abgasführung für eine Brennkraftmaschine, aufweisend:
ein Abgasrohr (12); und
eine Abgasabsperrklappenvorrichtung (14) aufweisend mindestens eine bewegbare, vorzugsweise schwenkbare, Absperrklappe (22), wobei die Abgasabsperrklappenvorrichtung (14) stromabwärts oder stromaufwärts des Abgasrohrs (12) angeordnet ist und die mindestens eine Absperrklappe (22) in einer Schließstellung der mindestens einen Absperrklappe (22) an mindestens einer Anschlagfläche (34) des Abgasrohrs (12) anliegt;
wobei das Abgasrohr (12) zwei Auslassöffnungen (16) oder Einlassöffnungen aufweist;
wobei die Abgasabsperrklappenvorrichtung (14) eine Abgasbremsklappenvorrichtung ist; und
wobei die Absperrklappenvorrichtung (14) zwei Absperrklappen (22) aufweist, die den zwei Auslassöffnungen (16) oder Einlassöffnungen zugeordnet sind
**dadurch gekennzeichnet, dass** die mindestens eine Anschlagfläche (34) in einer Flanschfläche (30) des Abgasrohrs (12) umfasst ist, an der die Abgasabsperrklappenvorrichtung (14) angeflanscht ist.

2. Vorrichtung (10) nach Anspruch 1, wobei:
die mindestens eine Absperrklappe (22) abdichtend an der mindestens einen Anschlagfläche (34) in der Schließstellung anliegt, sodass vorzugsweise kein Abgas vom Abgasrohr (12) in die Abgasabsperrklappenvorrichtung (14) strömt.

3. Vorrichtung (10) nach Anspruch 1 oder Anspruch 2, wobei:
in oder entgegen einer Strömungsrichtung des Abgases betrachtet, die mindestens eine Absperrklappe (22) mindestens eine Auslassöffnung (16) oder Einlassöffnung des Abgasrohrs (12) teilweise, vollständig und/oder ringförmig überlappt; und/oder
die mindestens eine Absperrklappe (22) in der Schließstellung mindestens eine Auslassöffnung (16) oder Einlassöffnung des Abgasrohrs (12), vorzugsweise vollständig, verschließt.

4. Vorrichtung (10) nach einem der vorherigen Ansprüche, wobei:
die mindestens eine Anschlagfläche (34) ringförmig oder ringsegmentförmig ist; und/oder
die mindestens eine Anschlagfläche (34) mindestens eine Auslassöffnung (16) oder Einlassöffnung des Abgasrohrs (12) zumindest teilweise oder vollständig umgibt und/oder begrenzt.

5. Vorrichtung (10) nach einem der vorherigen Ansprüche, wobei die Abgasabsperrklappenvorrichtung (14) ferner aufweist:
eine Montageöffnung (50) zum Einführen der mindestens einen Absperrklappe (22) in die Abgasabsperrklappenvorrichtung (14); und
einen lösbaren Deckel (48) zum Verschließen der Montageöffnung (50).

6. Vorrichtung (10) nach Anspruch 5, wobei:
der lösbare Deckel (48) einen Stegbereich (52) aufweist, der eine Schwenkwelle (40) und/oder einen Bereich zwischen zwei Absperrklappen (22) teilweise umgreift, vorzugsweise zum Verhindern eines Gasübertritts zwischen zwei Abgaskanälen (26) der Abgasabsperrklappenvorrichtung (14).

7. Vorrichtung (10) nach Anspruch 5 oder Anspruch 6, wobei:
die mindestens eine Absperrklappe (22) einen Klappenteil (22A) zum Bewirken eines Abgasgegendrucks und einen Lagerbereich (22B) zum schwenkbaren Lagern der Absperrklappe (22), vorzugsweise zum Verbinden mit einer Schwenkwelle (40), aufweist; und
die Montageöffnung (50) so dimensioniert ist, dass die mindestens eine Absperrklappe (22) mit dem Klappenteil (22A) und dem Lagerbereich (22B) einführbar ist und/oder dass mindestens zwei Absperrklappen (22) gemeinsam einführbar sind.

8. Vorrichtung (10) nach einem der Ansprüche 5 bis 7, wobei:
die Abgasabsperrklappenvorrichtung (14) mindestens einen Abgaskanal (26) aufweist, der von der mindestens einen Absperrklappe (22) verschließbar ist; und
die Montageöffnung (50) radial bezüglich des mindestens einen Abgaskanals (26) angeordnet ist.

9. Vorrichtung (10) nach einem der vorherigen Ansprüche, wobei:
die Abgasabsperrklappenvorrichtung (14) ferner eine Schwenkwelle (40) zum Verschwenken der mindestens einen Absperrklappe (22) aufweist;
die Schwenkwelle (40) integral-einstückig mit der mindestens einen Absperrklappe (22) als eine Einheit hergestellt ist; und
die Einheit für deren Montage gecrackt ist, vorzugsweise an einer oder mehreren vorbestimmten Trennstellen (58) in oder an einem Lagerbereich (22B) der mindestens einen Absperrklappe (22).

10. Vorrichtung (10) nach Anspruch 9, wobei:
die Schwenkwelle (40) als eine Hohlwelle gebildet ist und Einzelteile der gecrackten Einheit durch eine in die Hohlwelle einführbare Schraube (56) zusammenfügbar sind.

11. Vorrichtung (10) nach einem der Ansprüche 1 bis 8, wobei:
die Abgasabsperrklappenvorrichtung (14) eine mehrteilige, als Hohlwelle ausgebildete Schwenkwelle (40) aufweist, deren Einzelteile durch eine in die Hohlwelle einführbare Schraube (56) miteinander verbindbar sind.

12. Vorrichtung (10) nach einem der Ansprüche 9 bis 11, wobei:
die mindestens eine Absperrklappe (22) einen Lagerbereich (22B) aufweist, der einen hohlen Wellenabschnitt der Schwenkwelle (40) bildet; und
der Lagerbereich (22B) drehfest mit mindestens einem weiteren hohlen Wellenabschnitt (54) der Schwenkwelle (40) verbunden ist, vorzugsweise mittels Formschluss.

13. Vorrichtung (10) nach einem der vorherigen Ansprüche, wobei:
die mindestens eine Absperrklappe (22) in einer Öffnungsstellung teilweise außerhalb der Abgasabsperrklappenvorrichtung (14) und/oder innerhalb eines Abgaskanals (64) eines stromabwärts der Absperrklappenvorrichtung (14) angeordneten Turboladergehäuses (60) positioniert ist.

14. Kraftfahrzeug, vorzugsweise Nutzfahrzeug, mit einer Vorrichtung (10) nach einem der vorherigen Ansprüche.

## Claims

1. A device (10) for conducting exhaust gas for an internal combustion engine, comprising:
an exhaust pipe (12); and
an exhaust shut-off flap device (14) comprising at least one movable, preferably pivotable, shut-off flap (22), wherein the exhaust shut-off flap device (14) is arranged downstream or upstream of the exhaust pipe (12) and the at least one shut-off flap (22) rests against at least one abutment surface (34) of the exhaust pipe (12) in a closed position of the at least one shut-off flap (22);
wherein the exhaust pipe (12) comprises two outlet openings (16) or inlet openings;
wherein the exhaust shut-off flap device (14) is an exhaust brake flap device; and
wherein the shut-off flap device (14) comprises two shut-off flaps (22) associated with the two outlet openings (16) or inlet openings
**characterised in that** the at least one abutment surface (34) is comprised in a flange surface (30) of the exhaust pipe (12) to which the exhaust shut-off flap device (14) is flange-mounted.

2. The device (10) according to claim 1, wherein:
the at least one shut-off flap (22) rests sealingly against the at least one abutment surface (34) in the closed position, so that preferably no exhaust gas flows from the exhaust pipe (12) into the exhaust shut-off flap device (14).

3. The device (10) according to claim 1 or claim 2, wherein:
viewed in or against a flow direction of the exhaust gas, the at least one shut-off flap (22) partially, completely, and/or annularly overlaps the at least one outlet opening (16) or inlet opening of the exhaust pipe (12); and/or
the at least one shut-off flap (22) closes, preferably completely, the at least one outlet opening (16) or inlet opening of the exhaust pipe (12) in the closed position.

4. The device (10) according to one of the preceding claims, wherein:
the at least one abutment surface (34) is annular or annular segment-shaped; and/or
the at least one abutment surface (34) at least partially or completely surrounds and/or limits at least one outlet opening (16) or inlet opening of the exhaust pipe (12).

5. The device (10) according to any one of the preceding claims, wherein the exhaust shut-off flap device (14) further comprises
a mounting opening (50) for inserting the at least one shut-off flap (22) into the exhaust shut-off flap device (14); and
a detachable cover (48) for closing the mounting opening (50).

6. The device (10) according to claim 5, wherein:
the detachable cover (48) comprises a web region (52) which partially embraces a pivot shaft (40) and/or a region between two shut-off flaps (22), preferably for preventing a gas transfer between two exhaust ducts (26) of the exhaust shut-off flap device (14).

7. The device (10) according to claim 5 or claim 6, wherein:
the at least one shut-off flap (22) comprises a flap portion (22A) for effecting an exhaust gas back pressure and a bearing region (22B) for pivotably bearing the shut-off flap (22), preferably for connection to a pivot shaft (40); and
the mounting opening (50) is dimensioned such that the at least one shut-off flap (22) can be inserted with the flap portion (22A) and the bearing region (22B) and/or that at least two shut-off flaps (22) can be inserted together.

8. The device (10) according to any one of claims 5 to 7, wherein:
the exhaust shut-off flap device (14) comprises at least one exhaust duct (26), which can be closed by the at least one shut-off flap (22); and
the mounting opening (50) is arranged radially with respect to the at least one exhaust duct (26).

9. The device (10) according to one of the previous claims, wherein:
the exhaust shut-off flap device (14) further comprises a pivot shaft (40) for pivoting the at least one shut-off flap (22);
the pivot shaft (40) is integrally manufactured as a single unit with the at least one shut-off flap (22); and
the unit is cracked for its assembly, preferably at one or more predetermined separation points (58) in or on a bearing region (22B) of the at least one shut-off flap (22).

10. The device (10) according to claim 9, wherein:
the pivot shaft (40) is formed as a hollow shaft, and individual parts of the cracked unit can be joined together by a screw (56), which can be inserted into the hollow shaft.

11. The device (10) according to one of claims 1 to 8, wherein:
the exhaust shut-off flap device (14) comprises a multi-part pivot shaft (40) formed as a hollow shaft, the individual parts of which can be connected to one another by a screw (56) that can be inserted into the hollow shaft.

12. The device (10) according to any one of claims 9 to 11, wherein:
the at least one shut-off flap (22) comprises a bearing region (22B) forming a hollow shaft portion of the pivot shaft (40); and
the bearing region (22B) is non-rotatably connected to at least one further hollow shaft section (54) of the pivot shaft (40), preferably by form-fit.

13. The device (10) according to one of the preceding claims, wherein:
the at least one shut-off flap (22) is positioned in an opening position partially outside the exhaust shut-off flap device (14) and/or inside an exhaust duct (64) of a turbocharger housing (60) arranged downstream of the exhaust shut-off flap device (14).

14. Motor vehicle, preferably a commercial vehicle, with a device (10) according to one of the preceding claims.

## Revendications

1. Dispositif (10) pour le guidage des gaz d'échappement pour un moteur à combustion interne, présentant :
un tuyau de gaz d'échappement (12) ; et
un dispositif de clapets d'arrêt de gaz d'échappement (14) présentant au moins un clapet d'arrêt (22) mobile, de préférence pivotant, le dispositif de clapets d'arrêt de gaz d'échappement (14) étant disposé en amont ou en aval du tuyau de gaz d'échappement (12) et l'au moins un clapet d'arrêt (22) s'appuyant contre une surface de butée (34) du tuyau de gaz d'échappement (12) dans une position de fermeture de l'au moins un clapet d'arrêt (22) ;
le tuyau de gaz d'échappement (12) présentant deux ouvertures de sortie (16) ou ouvertures d'admission ;
le dispositif de clapets d'arrêt de gaz d'échappement (14) étant un dispositif de clapets de freinage de gaz d'échappement ; et
le dispositif de clapets d'arrêt de gaz d'échappement (14) présentant deux clapets d'arrêt (22) qui sont associés aux deux ouvertures de sortie (16) ou ouvertures d'admission
**caractérisé en ce que** l'au moins une surface de butée (34) est comprise dans une surface de bride (30) du tuyau de gaz d'échappement (12), surface de bride sur laquelle le dispositif de clapets d'arrêt de gaz d'échappement (14) est fixé par bride.

2. Dispositif (10) selon la revendication 1, dans lequel :
l'au moins un clapet d'arrêt (22) s'appuie de façon étanche sur l'au moins une surface de butée (34) dans la position de fermeture, de sorte que, de préférence, aucun gaz d'échappement ne s'écoule à partir du tuyau de gaz d'échappement (12) dans le dispositif de clapets d'arrêt de gaz d'échappement (14).

3. Dispositif (10) selon la revendication 1 ou la revendication 2, dans lequel :
considéré dans un sens d'écoulement ou dans un sens inverse d'un sens d'écoulement des gaz d'échappement, l'au moins un clapet d'arrêt (22) chevauche partiellement, complètement et/ou de façon annulaire au moins une ouverture de sortie (16) ou ouverture d'admission du tuyau de gaz d'échappement (12) ; et/ou l'au moins un clapet d'arrêt (22) dans la position de fermeture ferme, de préférence complètement, au moins une ouverture de sortie (16) ou ouverture d'admission du tuyau de gaz d'échappement (12).

4. Dispositif (10) selon l'une des revendications précédentes, dans lequel :
l'au moins une surface de butée (34) est de forme annulaire ou en forme de segment annulaire ; et/ou
l'au moins une surface de butée (34) entoure et/ou délimite au moins partiellement ou complètement au moins une ouverture de sortie (16) ou ouverture d'admission du tuyau de gaz d'échappement (12).

5. Dispositif (10) selon l'une des revendications précédentes, dans lequel le dispositif de clapets d'arrêt de gaz d'échappement (14) présente en outre :
une ouverture de montage (50) pour l'introduction de l'au moins un clapet d'arrêt (22) dans le dispositif de clapets d'arrêt de gaz d'échappement (14) ; et
un couvercle (48) amovible pour la fermeture de l'ouverture de montage (50).

6. Dispositif (10) selon la revendication 5, dans lequel :
le couvercle (48) amovible présente une région formant nervure (52) qui vient en prise partiellement autour d'un arbre pivotant (40) et/ou d'une région entre deux clapets d'arrêt (22), de préférence pour empêcher un passage de gaz entre deux canaux de gaz d'échappement (26) du dispositif de clapets d'arrêt de gaz d'échappement (14).

7. Dispositif (10) selon la revendication 5 ou la revendication 6, dans lequel :
l'au moins un clapet d'arrêt (22) présente une partie de clapet (22A) pour provoquer une contre-pression de gaz d'échappement et une région de support (22B) pour le support pivotant du clapet d'arrêt (22), de préférence pour la liaison à un arbre pivotant (40) ; et
l'ouverture de montage (50) est dimensionnée de telle sorte que l'au moins un clapet d'arrêt (22) comportant la partie de clapet (22A) et la région de support (22B) peut être introduit et/ou de telle sorte qu'au moins deux clapets d'arrêt (22) peuvent être introduits ensemble.

8. Dispositif (10) selon l'une des revendications 5 à 7, dans lequel :
le dispositif de clapets d'arrêt de gaz d'échappement (14) présente au moins un canal de gaz d'échappement (26) qui peut être fermé par l'au moins un clapet d'arrêt (22) ; et
l'ouverture de montage (50) est disposée radialement par rapport à l'au moins un canal de gaz d'échappement (26).

9. Dispositif (10) selon l'une des revendications précédentes, dans lequel :
le dispositif de clapets d'arrêt de gaz d'échappement (14) présente en outre un arbre pivotant (40) pour le pivotement de l'au moins un clapet d'arrêt (22) ;
l'arbre pivotant (40) est fabriqué intégralement d'une seule pièce avec l'au moins un clapet d'arrêt (22) en tant qu'unité ; et
l'unité est rompue pour son montage, de préférence en un ou plusieurs emplacements de séparation (58) prédéfinis dans ou sur une région de support (22B) de l'au moins un clapet d'arrêt (22).

10. Dispositif (10) selon la revendication 9, dans lequel :
l'arbre pivotant (40) est formé comme un arbre creux et des parties individuelles de l'unité rompue peuvent être assemblées par le biais d'une vis (56) pouvant être introduite dans l'arbre creux.

11. Dispositif (10) selon l'une des revendications 1 à 8, dans lequel :
le dispositif de clapets d'arrêt de gaz d'échappement (14) présente un arbre pivotant (40) en plusieurs parties, réalisé sous forme d'arbre creux, dont les parties individuelles peuvent être reliées les unes aux autres par le biais d'une vis (56) pouvant être introduite dans l'arbre creux.

12. Dispositif (10) selon l'une des revendications 9 à 11, dans lequel :
l'au moins un clapet d'arrêt (22) présente une région de support (22B) qui forme une partie d'arbre creuse de l'arbre pivotant (40) ; et
la région de support (22B) est reliée de façon solidaire en rotation, de préférence par complémentarité de formes, à au moins une autre partie d'arbre (54) creuse de l'arbre pivotant (40).

13. Dispositif (10) selon l'une des revendications précédentes, dans lequel :
l'au moins un clapet d'arrêt (22) est positionné dans une position d'ouverture partiellement à l'extérieur du dispositif de clapets d'arrêt de gaz d'échappement (14) et/ou à l'intérieur d'un canal de gaz d'échappement (64) d'un carter de turbocompresseur (60) disposé en aval du dispositif de clapets d'arrêt de gaz d'échappement (14).

14. Véhicule automobile, de préférence véhicule utilitaire, comportant un dispositif (10) selon l'une des revendications précédentes.
